# EUROPEAN PATENT APPLICATION

(11) **EP 1 837 868 A2**
(43) Date of publication of application: **26.09.2007**
(21) Application number: 07005497.8
(22) Date of filing: 16.03.2007
(51) Int. Cl.: G11B 7/006

(54) **Recording method on rewritable optical disc and optical disc driving apparatus**

(30) Priority: 20.03.2006 JP 2006077135
(71) Applicant: NEC Corporation, Minato-ku Tokyo (JP)
(72) Inventor: Yamanaka, Yutaka c/o NEC Corporation, Minato-ku, Tokyo (JP)
(74) Representative: Baronetzky, Klaus

(57) **Abstract**

In a recording method on a rewritable optical disc a control data recording zone (12) in which a control data is recorded, is set to a portion of the optical disc which is close to a user data recording area (4) in an inner circumference control data record area. A spiral recordable track of the optical disc is divided into the inner circumference control data record area, the user data recording area, an outer control data record area from an inner circumference side. The control data indicates record states of the inner circumference control data record area, the user data recording area, and the outer control data record area in the optical disc. A new control data is recorded on one of a plurality of record divisions contained in the control data recording zone. A planned record division is set for the control data to be next recorded after the control data is recorded in the one record division.

## Description

### Background of the Invention

### 1. Field of the Invention

The present invention relates to a recording method on a rewritable optical disc that recording and reproducing operations of a data are performed by use of a fine light spot, and an apparatus for driving the same.

### 2. Description of the Related Art

In an optical disc field for recording and reproducing a data by use of a fine light spot, CD-R (Compact Disc-Recordable) and DVD-R (Digital Versatile Disc-Recordable) are spread widely as optical discs which can record the data, following a ROM (Read Only Memory) medium dedicated to a reproduction, in which an embossed data pit sequence is formed in advance. Also, there are optical discs referred to as CD-RW (CD-ReWritable) and DVD-RW (DVD-Rewritable) in which recorded data can be rewritten. Moreover, a standard called HD DVD in which a blue light source is used is also established as a next generation of DVD.

In the rewritable optical disc, spiral groove tracks for tracking are formed on an optical disc substrate, and a multi-layer record layer formed of phase change material is formed thereon. A laser beam of high power is focused onto this record layer, and the crystal structure of the phase change material is partially changed, to form record pits. The data is recorded as the record pits. After the data is recorded, the disc has the same data format as a ROM medium in which the embossed data pit sequences are formed, and a servo signal of a substantially same property can be obtained. Thus, there is a merit that it can be easily reproduced even the driving apparatus dedicated to the reproduction.

The recorded data is erased by emitting a laser beam whose power is slightly lower than a power when a data is recorded to return the crystal structure of the phase change material to the original state. In the actual operation, the laser beam is generated by adding a record power of a new data to be next recorded to a record power necessary for the erasing operation and is emitted to the optical disc. Thus, the already-recorded data is erased, and the new data is recorded, thereby the rewrite of the data becomes possible.

In the rewritable optical disc, the change in the crystal structure of the phase change material is used when the data is recorded. Thus, the repetition of the rewrite gradually brings about the deterioration in the property of a record signal. However, this has a merit that the actual number of times of the repetition between hundred of times and thousands of times can be cheaply attained.

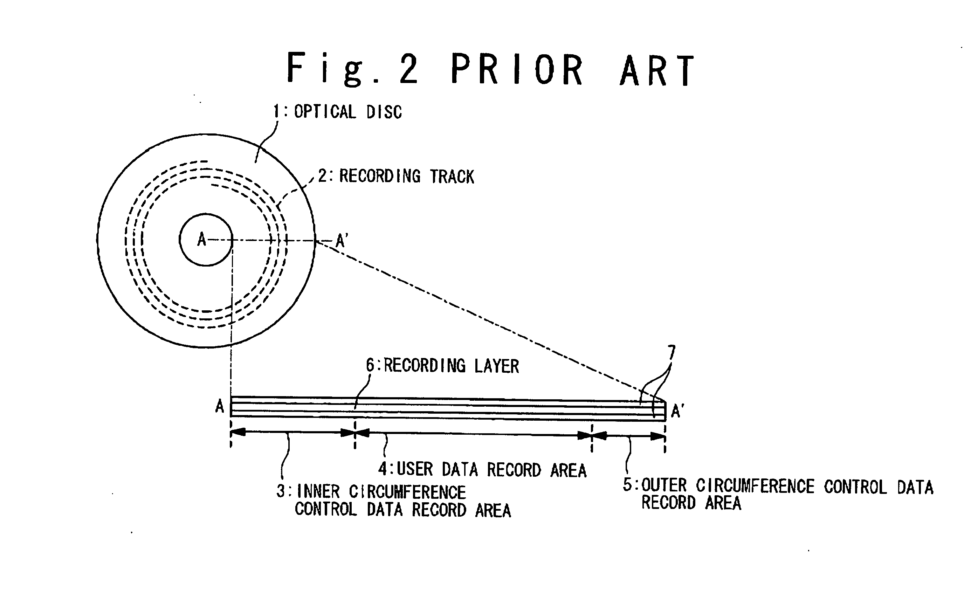

Fig. 2 shows a configuration example of a record area of the rewritable optical disc. The record area of an optical disc 1 is divided into an inner circumference control data record area 3, a user data recording area 4 and an outer circumference control data record area 5 in a radial direction. The user data is recorded in the user data recording area 4, and its control data and the like are recorded in the inner circumference control data record area 3 and the outer circumference control data record area 5.

After the user data is recorded in the user data recording area 4, an ending process is performed such that the reproduction is possible even in the driving apparatus dedicated to the reproduction. Through the ending process, record pits in a predetermined width or more in the radial direction are formed in the inner circumference control data record area 3 close to the user data recording area 4. This is because in the driving apparatus dedicated to the reproduction, only the area where the record pits are formed is accessible in many cases, and when a search operation is performed over the user data recording area, a position address is reproduced based on the record pits formed in the ending process so that an access control is possible. Usually, the record pits for the ending process as mentioned above are formed over the width of several hundred µm in the radial direction.

A control data record zone to record control data indicating the record state of the optical disc 1 is typically set in the inner circumference control data record area 3. This control data is a data essential for the recording/reproducing operation in the driving apparatus, such as a data record position inside a user data area, a parameter data for a servo control, and a record power data. Thus, its reliability is required to be reserved higher than that of the user data. Also, the rewritable optical disc has a possibility that the control data is rewritten each time the user data is rewritten. Therefore, the rewriting frequency of the control data tends to be higher than that of the user data.

In the commercially available DVD-RW, the control data record zone is divided into a plurality of divisions, in order to ensure the reliability when this control data is recorded. As the recording method, the control data is repeatedly recorded in one division, and when the increase in the number of times of the rewrite causes the signal property to be deteriorated, a next division is newly used to record the control data. In the recording of the control data, through the employment of the method of changing the record division when the property is deteriorated as mentioned above, it is possible to perform the rewriting operation more than the limited number of times of the rewrite of the recording layer.

However, in this method, the record property is naturally different depending on the presence or absence of the use of the division, and the used division whose property is deteriorated has a possibility that it is also difficult to reproduce a position address from a recorded signal. Thus, the control data record zone cannot be set for a portion, which is close to the user data recording area and requires the ending process. Therefore, there is a limit that it must be set for a portion on an inner circumferential side away from the user data recording area even inside an inner circumference control data record area. Therefore, when the recording of the user data and the recording of the control data are performed frequently and alternately, this method has a defect that the loss of the access time caused by the long distance is generated in many times.

In the DVD-RW, in addition to the foregoing recording mode, the using method similar to a recordable optical disc to which data can be written only one time is defined. In this case, at the same time when the user data are additionally written to non-recorded areas sequentially, the new control data is additionally recorded to the non-recorded area of the control data record zone, when the recorded user data is increased by a predetermined record capacity. It is recorded in each portion inside the control data record zone, basically only one time, and the number of times of the recording operation is limited in accordance with the zone capacity. When the optical disc is again used, this zone is erased entirely and collectively, and it is returned to the non-recorded area and then recorded.

The additionally recordable portion of the user data area is basically limited to a portion next to the already-recorded area. Thus, even if the newest control data cannot be excellently reproduced, the state of the user data area can be recognized to some degree by reproducing the previously old control data. However, in this case, it is impossible to rewrite the data at any position in the user data area. Since the number of times of the recording operation of the new control data into the control data record zone is limited, there is a merit that the control data record zone becomes full due to the additional recording to the non-recorded portion. However, there is a defect that the user data cannot be freely rewritten in the original rewritable optical disc.

Japanese Laid Open Patent Application (JP-P2000-076786A) discloses a disc still image recording method, in which a still image is recorded on a disc in which the number of times of a recording operation is limited. The disc is provided with a still image record area where the still image is recorded; a plurality of record position data sectors in which record position data indicating the position of the still image on the disc is recorded; and a pointer sector where the data to specify the record position data sector is recorded in which a final record position data is written. When the still image is recorded, the still image is recorded in a particular position of the still image record area in accordance with the final record position data of the record position data sector specified by the pointer sector. Together with it, in such a manner that the number of times of the recording operation in the record position data sector does not exceed the maximum number of times of the recording operation, while the plurality of record position data sectors are managed, the record position data of the still image and the number of the recordings in the record position data sector are update-recorded in the same record position data sector or a different record position data sector. When the record position data is recorded in the different record position data sector, the pointer sector is update-recorded in the data to specify this record position data sector.

Also, Japanese Laid Open Patent Application (JP-P2009-103078A) discloses a data record medium, which has a reproduction data area and a control data area, and which the control data is recorded as a PEP (Phase Encoded Part) signal. A reproduction data to be reproduced is recorded in the reproduction data area. In the control data area, the control data including a reproduction control data necessary when at least the reproduction data is reproduced is equally CAV (Constant Angular Velocity) recorded in a plurality of tracks with an amount corresponding to one rotation of a track as one unit. The data of the data area recorded as the PEP signal is divided into a plurality of error correction units, and an error correction code is recorded in the data area for each error correction unit. Also, as the control data of a control data area, a BCA (Burst Cutting Area) signal is further recorded.

Also, Japanese Laid Open Patent Application (JP-P2005-327385A) discloses a method of recording data on an optical disc. An optical disc medium contains a data area in which a user data is recorded; a first system area inside the data area; and a second system area outside the data area. The first system area includes a first learning area to set an optimal condition in the recording operation in the data area; and a management data record area to manage a data in the recording operation of the user data in the data area. The second system area includes a protection area to protect the user data therein; and a second learning area to set an optimal condition in the recording operation in the data area outside the protection area. This management data record area includes an area for a data indicating the use state of the protection area to be recorded. In the method of recording a data in the optical disc, the optimal condition in the recording is determined in the second learning area and the protection area. A data indicating a using method of the protection area is recorded in the area to record the data indicating the using method of the protection area.

### Summary of the Invention

It is therefore an object of the present invention to provide a recording method of a rewritable optical disc in which a control data is recorded in a high reliability, even if the number of times of a rewriting operation of data increases, and a driving apparatus used for the recording method.

In an aspect of the present invention, a recording method on a rewritable optical disc, is achieved by setting a control data recording zone in which a control data is recorded, to a portion of the optical disc which is close to a user data recording area in an inner circumference control data record area; wherein a spiral recordable track of the optical disc is divided into the inner circumference control data record area, the user data recording area, an outer control data record area from an inner circumference side; wherein the control data indicates record states of the inner circumference control data record area, the user data recording area, and the outer control data record area in the optical disc; by recording a new control data on one of a plurality of record divisions contained in the control data recording zone; and by setting a planned record division for the control data to be next recorded after the control data is recorded in the one record division.

Here, the set control data recording zone may include an ending process record area portion in which record pits have been formed until an ending process.

Also, the record division may include a plurality of ECC blocks, each of the plurality of ECC blocks being a minimum unit when a data is recorded on the optical disc. The recording is achieved by recording the control data to each of the plurality of ECC blocks of the optical disc.

Also, the control data may have a count value in which an order for a data to be recorded in the record division is written.

Also, the control data may further have a data indicating a defect detected in the record in the record division.

Also, the setting a planned record division is achieved by setting the record division on an outer circumferential side by one record division to the planned record division each time the control data has been recorded in the record division.

Also, the setting a planned record division may be achieved by setting the record division on an innermost circumferential side to the planned record division when the control data has been recorded in the record division on an outermost circumferential side. The control data recording zone may be used circulatedly.

Also, the recording method may be achieved by further setting a control data replica zone in which a replica of the control data is recorded on an inner circumferential side of the control data recording zone; and recording a latest the control data and a position data indicating the record division in which the latest control data has been recorded, as a replica control data in the control data replica zone.

Also, the control data replica zone contains a plurality of ECC blocks. The recording a latest the control data may be achieved by recording the replica control data to one of the plurality of ECC blocks in the control data replica zone.

Also, the control data replica zone may include the ECC blocks of a number which is less than 1/10 of a number of the record divisions in the control data recording zone.

Also, the recording a latest the control data may be achieved by recording the replica control data to the control data replica zone when the optical disc is ejected.

Also, the recording a latest the control data may be achieved by circulatedly using the plurality of ECC blocks in the control data replica zone.

In another aspect of the present invention, an optical disc drive apparatus includes an optical head configured to irradiate a laser beam to an optical disc to record a data, and to reproduce a reproduction signal of the recorded data based on a reflection beam reflected by the optical disc; wherein in the optical disc, a recordable spiral track is divided into an inner circumference control data record area, a user data recording area, and an outer circumference control data record area from an inner circumferential side; a signal detecting section configured to extract a signal indicating an address of the optical disc based on the reproduction signal; an address determining section configured to specify a position in the optical disc based on the signal indicating the address; and a control data recording section configured to record a control data indicating a record state of the optical disc in one of a plurality of record divisions of a control data recording zone to have been set to a portion of the optical disc close to the user data recording area in the inner circumference control data record area specified by the address determining section, and to set a planed record division where the control data is recorded.

Here, the control data recording section may circulatedly assign each of the plurality of record divisions as the planed record division.

Also, the control data recording section may record a latest one of the control data and a data indicating a position of the record division where the latest control data has been recorded in a control data replica zone provided on a further inner circumferential side than the control data recording zone as a replica control data.

Also, the control data replica zone may include a plurality of ECC blocks less than a number of record divisions contained in the control data recording zone. The control data recording section may record the replica control data to one of the plurality of ECC blocks contained in the control data replica zone.

Also, the control data recording section ay record the replica control data when the optical disc is ejected.

Also, the control data recording section may record the replica control data by using the plurality of ECC blocks contained in the control data replica zone circulatedly.

### Brief Description of the Drawings

Fig. 1 is a block diagram showing a configuration example of a driving apparatus according to an embodiment of the present invention;
Fig. 2 is a diagram showing the format of a rewritable optical disc according to the embodiment;
Fig. 3 is a view explaining a zone arrangement according to the embodiment;
Figs. 4A, 4B are views showing a block configuration example inside a zone according to the embodiment;
Figs. 5A, 5B and 5C are views explaining a change in a record state of the rewritable optical disc according to the embodiment; and
Fig. 6 is a view showing an operation example of the driving apparatus according to the embodiment.

### Description of the Preferred Embodiments

Hereinafter, a recording method of a rewritable optical disc by a driving apparatus according to the present invention will be described in detail with reference to the attached drawings.

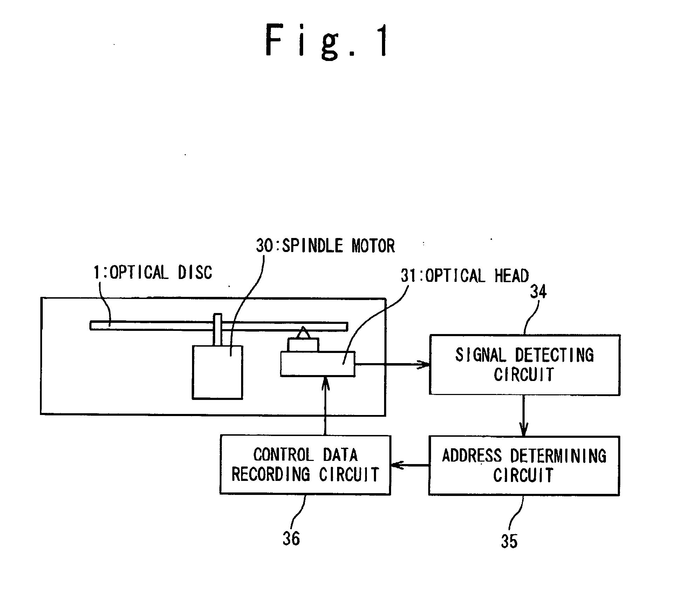

Fig. 1 shows the configuration of the driving apparatus according to the present invention. The driving apparatus contains a spindle 30, an optical head 31, a signal detecting circuit 34, an address determining circuit 35 and a control data recording circuit 36. Here, a portion of a rewritable optical disc 1 where a control data is recorded is described, and the description of the others are omitted.

The spindle 30 rotates and drives the optical disc 1. The optical head 31 reproduces a reproduction signal corresponding to a data recorded in the optical disc 1 from a reflection light when an emitted laser beam is reflected by the rotating optical disc 1. Also, the optical head 31 emits the strong laser beam, and the data is recorded in the optical disc 1 or it is erased.

The reproduction signal reproduced by the optical head 31 is supplied to the signal detecting circuit 34. The signal detecting circuit 34 extracts a signal indicative of an address of the optical disc 1 from the reproduction signal, and sends to the address determining circuit 35. The address determining circuit 35 specifies one of various areas and one of zones in accordance with the signal indicative of the address of the optical disc 1. The control data recording circuit 36 records the control data necessary for the specified control data recording zone, the specified control data replica zone and the like on the optical disc 1.

Fig. 2 shows the configuration of the record area of the optical disc 1. A spiral recording track 2 is formed on the record surface of the optical disc 1. The lower portion of Fig. 2 shows the section of a portion AA' of the optical disc 1 for the recording track 2. The laser beam emitted from the optical head 31 generates a light focused spot on a record layer 6, in which the data is recorded, through a transparent layer 7 of the optical disc 1. As the record layer 6, for example, a multi-layer film is used in which a film of the phase change material such as GeSbTe compound is sandwiched with dielectric protection layers of SiN. As the transparent layer, a mold shape formed by injection molding is used in which grooves for the recording track are formed on a polycarbonate substrate.

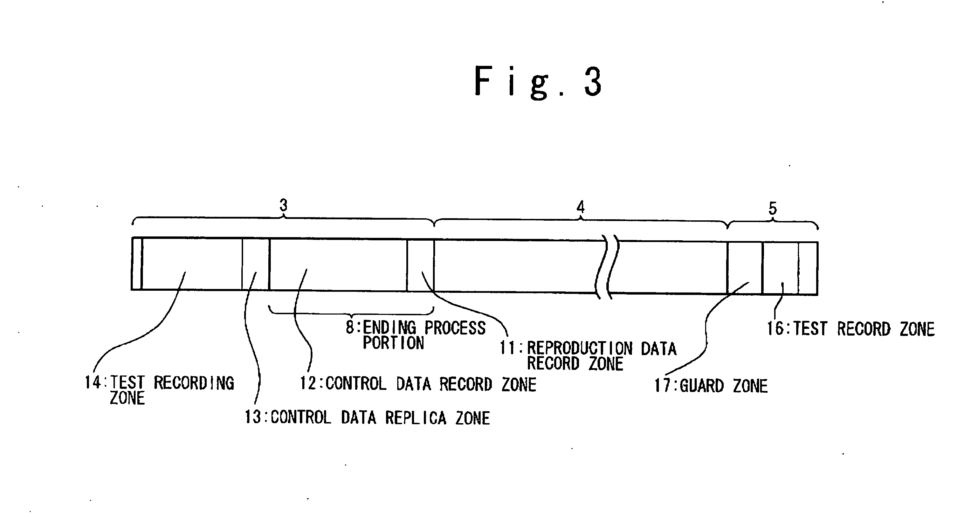

As shown in Fig. 2, the recording track 2 is divided into the inner circumference control data record area 3, the user data recording area 4 and the outer circumference control data record area 5 from the inner circumference side. Each area is further divided into such zones as shown in Fig. 3.

The inner circumference control data record area 3 contains a reproduction data record zone 11, a control data record zone 12, a control data replica zone 13 and a test record zone 14, from the side of the user data recording area 4 (the outer circumference side). Among those zones, the reproduction data recording zone 11 and the control data recording zone 12 are contained in an ending process portion 8. The ending process portion 8 is a portion where record pits are formed through the ending process in order to reserve the compatibility with the driving apparatus dedicated to the reproduction.

The reproduction data recording zone 11 is an area that is read-accessed by a driving apparatus dedicated to reproduction, and a data to know the record state of the user data recording area 4 is recorded. The reproduction data recording zone 11 may be sufficient if a recording apparatus can record a small amount of data as the ending process after a user data recording process. Thus, it is sufficient that a small area is reserved. Although the detail of the control data recording zone 12 and the control data replica zone 13 will be described later, they are areas where a control data is recorded when the user data is recorded in the user data recording area 4. The test recording zone 14 is an area used when the driving apparatus carries out a trial recording operation and searches an optimal record condition such as a record power.

There is a case that an area dedicated to reproduction and composed of embossed pits is formed on the inner side in the inner circumference control data record area 3. A data to protect a copyright and a disc data may be recorded in this area dedicated to reproduction.

The outer circumference control data record area 5 contains a guard zone 17 and a test recording zone 16, from the side of the user data recording area 4 (the inner circumference side). The guard zone 17 is reserved to additionally form the record pits after the recording operation of the user data is ended, in order that a driving apparatus dedicated to reproduction can carry out the control even if it overruns the user data recording area 4. The test recording zone 16 is an area used when the driving apparatus carries out a trial recording operation and searches the optimal record condition such as the record power, similarly to the test recording zone 14 in the inner circumference control data record area 3.

The area configuration of the control data recording zone 12 and the control data replica zone 13 will be described below. The record on the optical disc 1 and reproduction from it are usually performed in units of ECC blocks which are minimum units, and in which an error correction code is added to an original data. The effective data amount of this ECC block is assumed to be 32 Kbytes in a DVD standard and 64 Kbytes in an HD DVD standard. The ECC block has a capacity enough to store the control data. Thus, the recording operations in the control data recording zone 12 and the control data replica zone 13 are performed in units of ECC blocks.

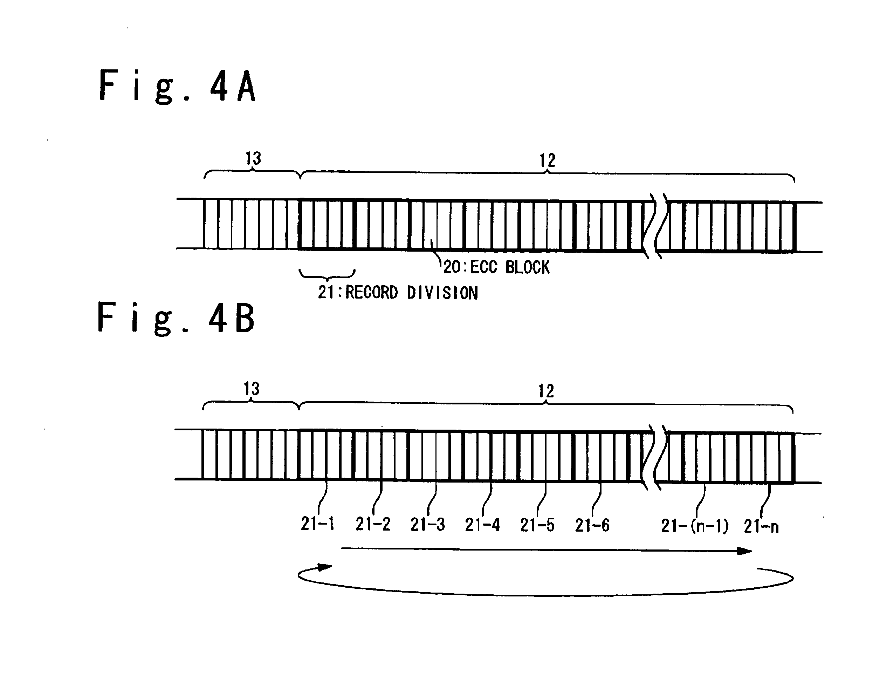

Figs. 4A and 4B show the area configuration of the control data recording zone 12 and the control data replica zone 13 in units of ECC blocks, respectively. As shown in Fig. 4A, the control data replica zone 13 contains 7 ECC blocks 20, and the control data recording zone 12 contains about 100 record divisions 21, each of which is composed of 4 ECC blocks 20.

The control data of the same content is recorded in the record division 21 four times. That is, the control data is recorded in each ECC block 20, and the 4 ECC blocks 20 in the record division 21 hold the same content. In this way, since the same control data is recorded in the plurality of ECC blocks 20, the reliability at the time of the reproduction can be improved.

The number of the ECC blocks 20 contained in the record division 21 is determined under consideration of the reliability of the record medium and a time necessary for the recording operation. In the actual phase change optical disc whose bit error rate is about 1×10⁻⁵, a proper value is between several blocks and 8 blocks. Thus, the 4 blocks is exemplified.

An order when the control data is recorded in the record division 21 in the control data recording zone 12 is circulated, as shown in Fig. 4B. The control data is recorded in an order starting from a record division 21-1 on the inner circumferential side. Each time the new control data is required to be recorded, the record divisions 21 on the outer circumferential side are sequentially used, one by one, such as record divisions 21-2, 21-3, .... When the number of record divisions 21 is assumed to be n, the record division 21 in which the control data is recorded arrives at the record division 21-n on the outermost circumferential side, at the time of the n-th recording operation. The next (n+1)-th control data is also recorded in the record division 21-1 on the innermost circumferential side. In this way, in the control data recording zone 12, the record divisions 21 are circulatedly used from the inner circumferential side to the outer circumferential side. Through the circulated use, the number of times of the recording operation of the control data is never limited by the capacity of the control data recording zone 12. Moreover, in all of the record divisions 21 in the control data recording zone 12, the number of times of the rewriting operation is substantially uniform, and the deterioration in the record property through the repetitive recording operation can be prevented from being locally generated.

Moreover, the signal reproduction is performed substantially in the entire of the control data recording zone 12 until the deterioration in the record property. Thus, the control data recording zone 12 can be set for an area which is located close to the user data recording area 4 and on which the ending process must be performed. Therefore, an access time when the user data recording area 4 and the control data recording zone 12 are alternately accessed is made shorter, which can reduce the recording operation time of the user data.

The control data can be recorded in the area requiring the ending process. Thus, the number of record divisions 21 contained in the control data recording zone 12 may be a approximate number by which the area width requiring the ending process can be reserved. Also, at the time of the performance of the ending process, when the non-recorded record divisions 21 remain in the control data recording zone 12, the newest control data is recorded in one of the non-recorded record divisions 21 in the ending process. According to this circulated recording method, the control data are recorded in the adjacent record divisions 21 one after another. Thus, all of the record divisions 21 in the control data recording zone 12 become the already-recorded state in a relatively short time. Therefore, as compared with a case that a next record division 21 is used after the control data is repeatedly recorded until one record division 21 becomes unusable, the number of non-recorded record divisions 21 in which the control data must be recorded at the time of the ending process is made smaller. That is, the time of the ending process can be reduced.

Also, for example, when a property deterioration or record defect is generated in the record division 21-i, it is easy to record the same control data in the next record division 21-(i+1). Moreover, the position of the defective record division 21-i may be contained in the control data and recorded. In this case, when the control data are circulatedly recorded in the record division 21-i of the same position, a defect control such as skipping of the division can be performed.

The control data replica zone 13 is provided on the inner circumferential side of the control data recording zone 12, as shown in Figs. 4A and 4B. In the control data replica zone 13, the replica of the newest control data is recorded together with the position data of the record division where the newest control data is recorded. The control data replica zone 13 is provided to increase the speed of the retrieval of the newest control data. The control data includes a counter value that is counted up each time it is updated to the new data.

The retrieval of the newest control data in the control data recording zone 12 can be attained by finding out the greatest counter value. However, the retrieval from the entire of record divisions 21 composed of about 100 divisions requires a certain reasonable time.

In the present invention, at the ending process of the optical disc, or when the optical disc is taken away from the driving apparatus, the replica of the newest control data together with the position data of the record division 21 where the newest control data is recorded is recorded in the control data replica zone 13. In the driving apparatus into which the optical disc is inserted, since this control data replica zone 13 is firstly reproduced, the newest control data and its record position can be easily known.

This object is to increase the speed of the retrieval. Thus, the control data to be recorded in the control data replica zone 13 is recorded only in one of the ECC blocks 20. Also, in order to reserve the number of times of the rewriting operation, the control data replica zone 13 includes the plurality of ECC blocks 20. When the control data is recorded in the plurality of ECC blocks 20, a method is employed which circulatedly repeats the recording operation from the inner circumferential side to the outer circumferential side one by one, similarly to the control data recording zone 12. Also, the number of the blocks of the ECC blocks 20 is made smaller than the number of the record divisions 21, and it is set such that the retrieval time is reduced. As shown in Figs. 4A and 4B, for example, the number of ECC blocks 20 in the control data replica zone 13 is 7 while the number of record divisions 21 is about 100. In this way, the number of ECC blocks is set to be 1/10 or less of the number of the record divisions 21. Thus, as compared with a case of direct retrieval of the control data recording zone 12, the retrieval speed that is faster by one digit or more can be attained. Also, the repetitive number of times of the recording operation can be reserved simultaneously with it.

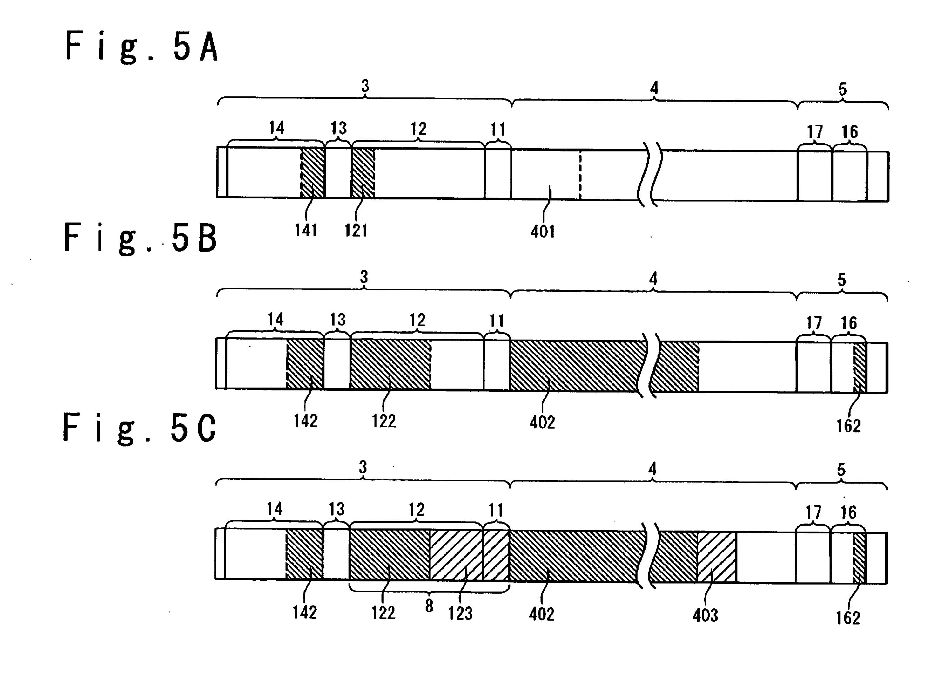

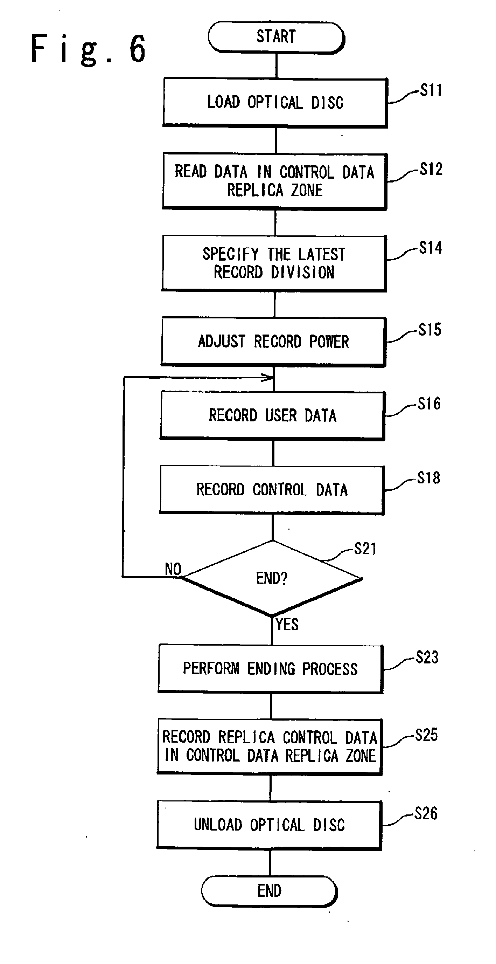

The operation of the driving apparatus will be described below with reference to Figs. 5A, 5B and 5C and Fig. 6. Figs. 5A to 5C are diagrams showing the change in record state of the optical disc where the user data is recorded by the driving apparatus. Fig. 6 is a flowchart showing the operation of the driving apparatus.

When the optical disc 1 is inserted into the driving apparatus (Step S11), the driving apparatus reads the replica control data recorded in the control data replica zone 13 of the optical disc 1 (Step S12). If it is already recorded in the optical disc 1, the driving apparatus reads all of the replica control data recorded in the control data replica zone 13 of the optical disc 1. Also, in case of the non-recorded optical disc 1, there is no recorded control data. Thus, an initial value is set for the control data. In that case, the use of the record division 21 on the innermost circumferential side in the control data recording zone 12 is set when the control data is recorded. In accordance with the set control data, the driving apparatus sets the position of each area to be used.

The replica control data includes the control data and the position data of the control data recording zone 12 where the control data is recorded, and the control data includes a counter value. In this embodiment, since the control data replica zone 13 contains 7 ECC blocks 20, the 7 counter values are obtained. The replica control data having the greatest counter value among them is the newest replica control data. In accordance with the position data stored together with the newest control data, the record division 21 of the control data recorded in the control data recording zone 12 is specified (Step S19).

When each area is specified, the driving apparatus uses the test recording zone 14 on the inner circumferential side and carries out the optimization adjustment of the record power. The test recording zone 14 is used for a trial recording operation, sequentially from an area 141 on the outer circumferential side (Step S15).

When the record power is adjusted, the user data is recorded from the inner circumferential side of the user data recording area 4, and a record portion 401 is then formed (Step S16). In the pause of the recording of the user data, the control data is sequentially recorded even in the record division 21 of the control data recording zone 12, and an already-recorded area 121 is formed in the control data recording zone 12 (Step S18).

Until the recording operation of the user data has been ended, the operations of the steps S16 and S18 are repeated, and the record portion 401 in the user data recording area 4 is extended towards the outer circumferential side, and the control data is additionally recorded (Step S21-N). At this time, the driving apparatus uses the test recording zone 14 on the inner circumferential side and the test recording zone 16 on the outer circumferential side, as necessary, and adjusts the record condition.

As shown in Fig. 5B, the user data is recorded in the user data recording area 4, and a record portion 402 is formed. Also, the control data is recorded in the control data recording zone 12, and a record portion 122 is formed. Moreover, an area 142 of the test recording zone 14 and an area 162 of the test recording zone 16 become in an already-used state. In this stage, if the recording operation of the user data has been ended (Step S21-Y), the ending process is next performed.

The target of the ending process is an ending process portion 8 on the side of the user data recording area 4 in the inner circumference control data record area 3 and an ending process portion 403 on the outer circumferential side in the portion 402 where the user data is recorded, as shown in Fig. 5C. The ending process portion 8 includes the reproduction data recording zone 11 and the control data recording zone 12, and a predetermined data is recorded in the non-recorded portion in this area. The ending process portions 8 are all in the already-recorded state through in the ending process. If there is not the non-recorded portion, the recording operation can be omitted.

In the ending process portion 403 on the outer circumferential side of the portion 402 where the user data is recorded, predetermined data is recorded over the width in a predetermined radius direction. The width of this portion may be narrower than the ending process portion 8 on the inner circumferential side in the user data recording area 4 and can be set to about 50 µm. It should be noted that when all of the user data recording areas 4 become in the already-recorded state with the user data, this ending process portion 403 is set for the guard zone 17 on the outer circumference (Step S23).

Also, at this time, the replica of the newest control data together with the position data indicative of the position where the newest control data is recorded is circulatedly recorded in the control data replica zone 13 (Step S25). Either of the ending process to be recorded in the non-recorded portion and the process for recording the replica control data in the control data replica zone 13 may be earlier performed.

In the foregoing recording steps, the already-recorded optical disc 1 can be produced even by the driving apparatus dedicated to reproduction is created, and the optical disc 1 is taken away from the driving apparatus, and the recording process is ended (Step S26).

In the above-mentioned example, the user data are assumed to be continuously recorded from the inner circumferential side. However, the user data can be randomly recorded in the user data recording area 4. In this case, the non-recorded area portions of the area portions where the user data are discretely recorded require a process for setting all of area portions to be in the already-recorded state until the performance of the ending process.

Also, ideally, an updating process of the control data, namely, a process for recording the new control data in the control data recording zone 12 is usually performed when the control data is changed. However, in order to reduce the number of times of the useless rewriting operation as much as possible, the driving apparatus can store the changed control data in a memory of the apparatus and record it on the optical disc only when the optical disc is taken away or when the power source is turned off.

As mentioned above, the present invention has been described by exemplifying the rewritable optical disc of the single layer. However, even in a rewritable optical disc having two record layers, by setting the control data recording zone close to the user data area on the inner circumferential side of one record layer, it is possible to apply the similar recording method and driving apparatus.

## Claims

1. A recording method on a rewritable optical disc, comprising:
setting a control data recording zone in which a control data is recorded, to a portion of said optical disc which is close to a user data recording area in an inner circumference control data record area;
wherein a spiral recordable track of said optical disc is divided into said inner circumference control data record area, said user data recording area, an outer control data record area from an inner circumference side;
wherein said control data indicates record states of said inner circumference control data record area, said user data recording area, and said outer control data record area in said optical disc;
recording a new control data on one of a plurality of record divisions contained in said control data recording zone; and
setting a planned record division for said control data to be next recorded after said control data is recorded in said record division.

2. The recording method according to claim 1, wherein said set control data recording zone comprises an ending process record area portion in which record pits have been formed until an ending process.

3. The recording method according to claim 1 or 2, wherein said record division comprises a plurality of ECC blocks, each of said plurality of ECC blocks being a minimum unit when a data is recorded on said optical disc;
said recording comprises:
recording said control data to each of said plurality of ECC blocks in record division of said optical disc.

4. The recording method according to any of claims 1 to 3, wherein said control data has a count value in which an order when a data is recorded in said record division is written.

5. The recording method according to any of claims 1 to 4, wherein said control data further has a data indicating a defect detected in the record in said record division.

6. The recording method according to any of claims 1 to 5, wherein said setting a planned record division comprises:
setting said record division on an outer circumferential side by one record division as said planned record division each time said control data has been recorded in one of said plurality of record divisions.

7. The recording method according to any of claims 1 to 6, wherein said setting a planned record division comprises:
setting said record division on an innermost circumferential side to said planned record division when said control data has been recorded in said record division on an outermost circumferential side, and
said control data recording zone is used circulatedly.

8. The recording method according to any of claims 1 to 7, further comprising:
setting a control data replica zone in which a replica of said control data is recorded on an inner circumferential side of said control data recording zone; and
recording a latest one of said control data and a position data indicating said record division in which said latest control data has been recorded, as a replica control data in said control data replica zone.

9. The recording method according to claim 8, wherein said control data replica zone contains a plurality of ECC blocks,
said recording a latest one of said control data comprises:
recording said replica control data to one of said plurality of ECC blocks in said control data replica zone.

10. The recording method according to claim 9, wherein said control data replica zone comprises said ECC blocks of a number which is less than 1/10 of a number of said record divisions in said control data recording zone.

11. The recording method according to claim 9 or 10, wherein said recording a latest one of said control data comprises:
recording said replica control data to said control data replica zone when said optical disc is ejected.

12. The recording method according to any of claims 9 to 11, wherein said recording a latest one of said control data comprises:
circulatedly using said plurality of ECC blocks in said control data replica zone.

13. An optical disc drive apparatus comprising:
an optical head configured to irradiate a laser beam to an optical disc to record a data, and to reproduce a reproduction signal of the recorded data based on a reflection beam reflected by said optical disc;
wherein in said optical disc, a recordable spiral track is divided into an inner circumference control data record area, a user data recording area, and an outer circumference control data record area from an inner circumferential side;
a signal detecting section configured to extract a signal indicating an address of said optical disc based on said reproduction signal;
an address determining section configured to specify a position in said optical disc based on the signal indicating said address; and
a control data recording section configured to record a control data indicating a record state of said optical disc in one of a plurality of record divisions of a control data recording zone to have been set to a portion of said optical disc close to said user data recording area in said inner circumference control data record area specified by said address determining section, and to set a planed record division where said control data is recorded.

14. The optical disc drive apparatus according to claim 13, wherein said control data recording section circulatedly assigns each of said plurality of record divisions as said planed record division.

15. The optical disc drive apparatus according to claim 13 or 14, wherein said control data recording section records a latest one of said control data and a data indicating a position of said record division where said latest control data has been recorded in a control data replica zone provided on a further inner circumferential side than said control data recording zone as a replica control data.

16. The optical disc drive apparatus according to claim 15, wherein said control data replica zone comprises a plurality of ECC blocks less than a number of record divisions contained in said control data recording zone, and
said control data recording section records said replica control data to one of said plurality of ECC blocks contained in said control data replica zone.

17. The optical disc drive apparatus according to claim 15, wherein said control data recording section records said replica control data when said optical disc is ejected.

18. The optical disc drive apparatus according to claim 16 or 17, wherein said control data recording section records said replica control data by using said plurality of ECC blocks contained in said control data replica zone circulatedly.
